# EUROPÄISCHE PATENTSCHRIFT

(11) **EP 1 451 049 B1**
(45) Veröffentlichungstag und Bekanntmachung des Hinweises auf die Patenterteilung: **08.12.2010**
(21) Anmeldenummer: 02752991.6
(22) Anmeldetag: 03.07.2002
(51) Int. Cl.: B60S 1/34, F16C 33/20, B60S 1/04

(54) **SCHEIBENWISCHVORRICHTUNG, INSBESONDERE FÜR EIN KRAFTFAHRZEUG**
WIPER DEVICE, ESPECIALLY FOR A MOTOR VEHICLE
ENSEMBLE ESSUIE-GLACE, EN PARTICULIER POUR UN VEHICULE A MOTEUR

(30) Priorität: 27.11.2001 DE 10158099
(43) Veröffentlichungstag der Anmeldung: 01.09.2004
(73) Patentinhaber: ROBERT BOSCH GMBH, 70442 Stuttgart (DE)
(72) Erfinder: KALCHSCHMIDT, Peter, 76646 Bruchsal Untergromb (DE)
(86) Internationale Anmeldenummer: PCT/DE2002/002413
(87) Internationale Veröffentlichungsnummer: WO 2003/047930

(56) Entgegenhaltungen:
- EP-A- 0 771 958
- DE-A- 19 642 184
- DE-A- 19 833 159
- US-A- 5 634 726
- US-A- 5 688 054

## Beschreibung

### Stand der Technik

Die Erfindung betrifft eine Scheibenwischvorrichtung nach Gattung des unabhängigen Ansprüchs.

Es sind schon zahlreiche Scheibenwischvorrichtungen für Kraftfahrzeuge, beispielsweise aus der DE 197 45 690 C2, bekannt, die ein Trägerrohr mit zwei Enden aufweisen, an denen jeweils ein Wischerlager zur Lagerung von Wischerwellen befestigt ist. Die Wischerwellen ihrerseits, tragen dabei die Wischerarme, an deren freien Ende jeweils ein Wischblatt befestigt ist.

An die Lagereigenschaften der Wischerlager werden dabei sehr hohe Anforderungen gestellt. Einerseits sind die Lagerschalen aufgrund der pendelnden Bewegung der Wischerwellen ständiger Lastumkehr ausgesetzt, andererseits müssen die Lagergehäuse eine sehr hohe Festigkeit aufweisen, da das Getriebe ständig wechselnd eine Kraft in radialer Richtung auf das gesamte Wischerlager ausübt.

Darüber hinaus wird von der Scheibenwischeinrichtung ats Ganzes eine hohe Lebensdauer erwartet. Dazu werden die Wischerlager aus einem Spritzgussverfahren aus Kunststoff oder aus einem Druckgussverfahren aus Metall hergestellt, in die Lagerschalen eingepresst werden.

Aus der EP-A-0 0771 958 ist ein Wischerlager mit einem Lagergehäuse aus Kunststoff bekannt, in das die Wischwelle umschließende Ringe aus Kunststoff eingespritzt sind.

### Vorteile der Erfindung

Die erfindungsgemäße Scheibenwischvorrichtung mit den Merkmalen des Hauptanspruchs hat den Vorteil, dass durch das Spritzen der Wischerlager in mehreren Stufen verschiedenste Eigenschaften für die unterschiedlichen Lagerbereiche erzeugt werden können. Auf diese Weise kann optimal auf die verschiedenen Anforderungen, die an das Wischerlager gestellt werden, eingegangen werden.

Das Wischerlager weit mindestens eine Lagerschale und mindestens ein Lagergehäuse auf, welche in verschiedenen Stufen gespritzt sind, um auf die unterschiedlichen Anforderungen, einerseits der hohen Anforderungen an die Lagerschale wie eine hohe Härte und Maßhaltigkeit, sowie an die Anforderung des Lagergehäuses, also eine hohe Zähigkeit, eingegangen wird.

Das Wischerlager ist aus einem Kunststoff gespritzt, da diese einfach zu verarbeiten und kostengünstig sind.

Die Lagerschale ist in das Lagergehäuse eingespritzt, da sich auf diese Weise eine zumindest teilweise stoffschlüssige Verbindung zwischen Lagergehäuse und Lagerschale ausbildet.

Durch die in den Unteransprüchen aufgeführten Maßnahmen ergeben sich vorteilhafte Weiterbildungen und Verbesserungen der im Hauptanspruch angegebenen Merkmale.

Es ist hierbei vorteilhaft, wenn das Lagergehäuse und die Lagerschale aus verschiedenen Materialien gespritzt sind, welche idealerweise nach den jeweiligen Anforderungen ausgewählt sind.

Weiterhin ist es als vorteilhaft anzusehen, wenn das Lagergehäuse Haltenuten zur Sicherung der Lagerschalen aufweist, wodurch ein Mitdrehen der Lagerschale innerhalb des Lagergehäuses durch den entstehenden Formschluß verhindert wird.

Dabei ist vorteilhaft, wenn das Lagergehäuse eine Rändelung zur Sicherung der Lagerschale aufweist.

Weiterhin ist es als vorteilhaft anzusehen, wenn die Lagerschale in ihrer Form im Wesentlichen einem Hohlzylinder entspricht, wodurch die Maß- und Formtoleranzen der die Wischerwelle lagernden Innenfläche der Lagerschale genauer eingehalten werden können.

### Zeichnungen

Ein Ausführungsbeispiel der Erfindung ist in den Zeichnungen dargestellt und in der nachfolgenden Beschreibung näher erläutert. Es zeigen:
Figur 1 eine erfindungsgemäße Scheibenwischvorrichtung in einer perspektivischen Darstellung,
Figur 2 das Wischerlager einer erfindungsgemäßen Scheibenwischvorrichtung in einer Draufsicht und
Figur 3 das Wischerlager einer erfindungsgemäßen Scheibenwischvorrichtung in einer Variation.

### Beschreibung des Ausführungsbeispiels

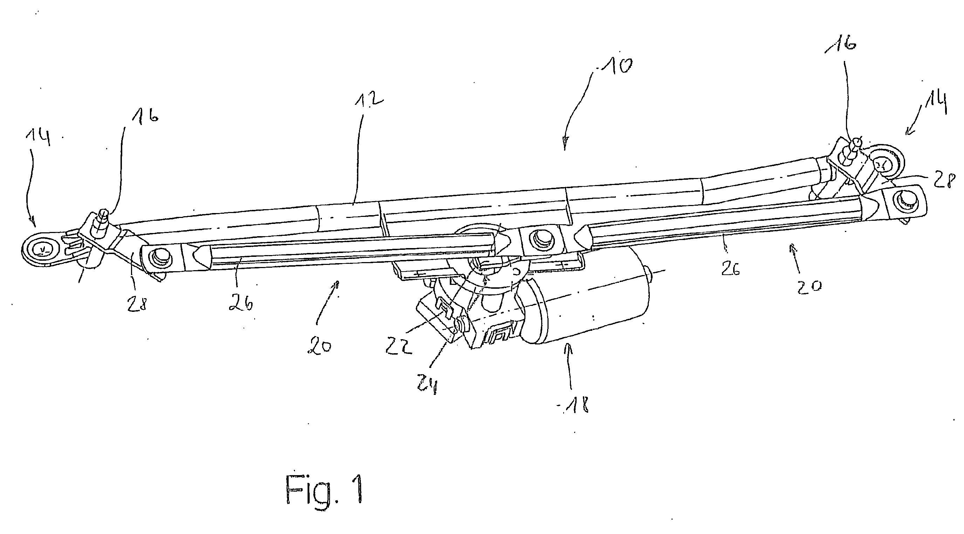

In Figur 1 ist eine erfindungsgemäße Scheibenwischvorrichtung 10 in einer perspektivischen Darstellung gezeigt. Diese besteht im Wesentlichen aus einem Trägerrohr 12 mit zwei Enden, an denen jeweils ein Wischerlager 14 befestigt ist. In den Wischerlagern 14 sind die Wischerwellen 16 gelagert. Die Wischerwellen 16 werden über einen Antriebsmotor 18 und ein Kurbelgetriebe 20 in eine pendelnde Bewegung versetzt. Das Kurbelgetriebe 20 besteht seinerseits aus einer Abtriebskurbel 22, die drehfest mit einer Motorabtriebswelle 24 des Antriebsmotors 18 verbunden ist und einer Schubstange 26, die durch die Bewegung des Antriebsmotors 18 in Bewegung versetzt wird. Die Schubstange 26 treibt daraufhin die Abtriebskurbel 28 an, die die Wischerwelle 16 somit in eine pendelnde Bewegung versetzt.

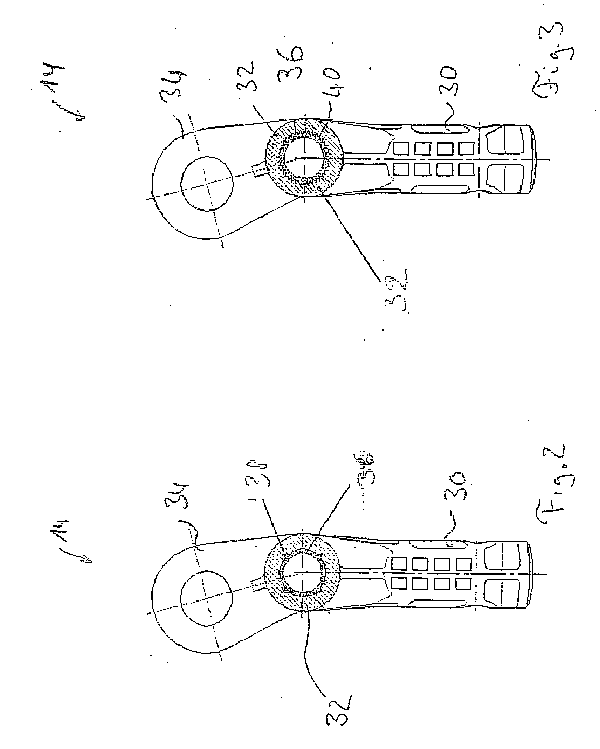

In Figur 2 ist das Wischerlager 14 einer erfindungsgemäßen Scheibenwischvorrichtung 10 im Detail dargestellt. Das Wischerlager 14 weist im Wesentlichen drei Abschnitte auf, und zwar einen ersten Befestigungsabschnitt 30, das Lagergehäuse 32 und den zweiten Befestigungsabschnitt 34. Der erste Befestigungsabschnitt 30 ist von im Wesentlichen zylindrischer Gestalt und dient dazu, in das Trägerrohr 12. eingeführt zu werden und damit das Wischerlager 14 mit dem Trägerrohr 12 zu verbinden. Senkrecht an dem zylindrischen ersten Befestigungsabschnitt 30 schliesst sich das Lagergehäuse 32 an, welches ebenfalls von im Wesentlichen zylindrischer Gestalt ist und Lagerschalen 36 trägt. An das Lagergehäuse 32 schließt sich der zweite Befestigungsabschnitt 34 an, der zur Befestigung der Scheibenwischvorrichtung 10 beispielsweise an der Karosserie eines Kraftfahrzeugs dient.

Die Befestigungsabschnitte 30, 34 und das Lagergehäuse 32 sind einstückig in einem Spritzgußverfahren aus Kunststoff hergestellt. Die Lagerschale 36 ist direkt in das Lagergehäuse 32 eingespritzt, so daß das Wischerlager 14 in einem Mehrkomponentigen Spritzgußverfahren - hier also einem zweikomponenten Spritzgußverfahren hergestellt ist. Je nach Werkstoffkombination entsteht dabei eine stoffschlüssige, zumindest jedoch eine kraft- und/oder formschlüssige Verbindung zwischen dem Lagergehäuse 32 und der Lagerschale 36. Diese wird durch Haltenuten 38 ergänzt, die beim Spritzen des Lagergehäuses 32 ausgespart werden. Beim Einspritzen der Lagerschalen 36 tritt dann Material in die Haltenuten 38 ein und verursacht so einen verbesserten Formschluß zwischen Lagergehäuse 32 und Lagerschale 36.

In Figur 3 ist das Wischerlager 14 aus Figur 2 in einer Variation der Erfindung gezeigt. Hierbei ist das Lagergehäuse 32 in seinem Inneren mit einer Rändelung 40 versehen, in die das Material der Lagerschalen 36 beim Einspritzen einfließt und somit, wie die Haltenuten 38, für eine formschlüssige Verbindung zwischen Lagergehäuse 32 und Lagerschalen 36 sorgt. Durch die vergrösserte Grenzfläche zwischen Lagergehäuse 32 und Lagerschale 36 wird außerdem der Stoffschluß zwischen diesen beiden verbessert, da beim Einspritzen der Lagerschale der heiße Kunststoff derselben auf grösserer Fläche mit dem abgekühlten Kunststoff des Lagergehäuses 32 in Berührung kommt und sich durch die zahnartige Struktur der Rändelung 40 Wärmebrücken bilden.

Beim erfindungsgemäßen Verfahren wird das Wischerlager 14 in mehreren Schritten gespritzt. Im ersten Schritt wird das Lagergehäuse 32 gespritzt und anschließend erkalten lassen, bis es eine ausreichende Festigkeit aufweist. Im Anschluß wird der Spritzgußform zumindest ein Kern entnommen und der Kunststoff der Lagerschale 36 in das Lagergehäuse 32 eingespritzt. Natürlich kann dies auch umgekehrt geschehen, so daß zuerst die Lagerschale 26 gespritzt wird und diese anschließend mit dem Lagergehäuse 32 umspritzt wird.

Selbstverständlich müssen sich die Haltenuten 38 und die Rändelung 40 nicht über die gesamte Länge der Längserstreckung der Lagerschale 36 erstrecken.

Weiterhin muß auch nicht unbedingt Kunststoff als Spritzgußmaterial verwendet werden. Auch verschiedene Metalle oder Keramiken, wie beispielsweise spritzbare Polymerkeramiken, sind insbesondere als Material für die Lagerschalen 36 möglich.

Als verschiedene Kunststoffe können beispielsweise auch Kunststoffe verwendet werden die sich lediglich in ihrer Taktizität unterscheiden und von daher unterschiedliche Eigenschaften aufweisen. So kann das Lagergehäuse 32 aus syndiotaktischem und die Lagerschale 36 aus härteren isotaktischem Polypropylen ausgebildet sein.

Darüber hinaus können auch verschiedene Stabilisierungskörper in die Spritzgußform eingebracht werden, die nach dem Spritzgießen im Lagergehäuse 32 oder in der Lagerschale 36 verbleiben.

In einer weiteren Variation können auch gezielt Kammern für Schmiermittel in der Lagerschale 36 ausgespart werden. Hierzu sei explizit auf die nicht vorveröffentlichte DE 101 14 033 A1 verwiesen, in der auch ein Verfahren zur Herstellung von Fettkammern gezeigt ist. Durch geeignete - Wahl der Innenkontur des Lagergehäuses 32 können auf diese Weise Kammern für Schmiermittel auch bei dem hier gezeigten Verfahren erzeugt werden.

## Patentansprüche

1. Scheibenwischvorrichtung (10), insbesondere für ein Kraftfahrzeug, mit mindestens einem, in einem Spritzgussverfahren hergestellten Wischerlager (14), in das eine Wischerwelle (16) einsetzbar ist, die einen Wischerarm anzutreiben vermag, wobei das Wischerlager (14) mindestens ein Lagergehäuse (32) und zwei Befestigungsabschnitte (34), wobei der erste zur Befestigung mit einem Trägerrohr und der zweite zur Befestigung an der Karosserie des Kraftfahrzeugs dient, aufweist, wobei das Lagergehäuse (32) und die Befestigungsabschnitte (34) einstückig aus Kunststoff ausgebildet sind, **dadurch gekennzeichnet, dass** das Wischerlager (14) eine Lagerschale (36) aufweist, die direkt in das Lagergehäuse (32) eingespritzt ist, so daß das Wischerlager (14) in einem zweikomponentigem Spritzgußverfahren hergestellt ist.

2. Scheibenwischvorrichtung (10) nach Anspruch 1, **dadurch gekennzeichnet, dass** Lagergehäuse (32) und Lagerschale (36) aus verschiedenen Kunststoff Materialien gespritzt sind.

3. Scheibenwischvorrichtung (10) nach einem der Ansprüche 1 bis 2, **dadurch gekennzeichnet, dass** das mindestens eine Lagergehäuse (32) Haltenuten (38) zur Sicherung der mindestens einen Lagerschale (36) aufweist.

4. Scheibenwischvorrichtung (10) nach einem der Ansprüche 1 bis 3, **dadurch gekennzeichnet, dass** das mindestens eine Lagergehäuse (32) eine Rändelung (40) zur Sicherung der mindestens einen Lagerschale (36) aufweist.

5. Scheibenwischvorrichtung (10) nach einem der Ansprüche 1 bis 4, **dadurch gekennzeichnet, dass** die mindestens eine Lagerschale (36) in seiner Form im wesentlichen einem Hohlzylinder entspricht

## Claims

1. Wiper device (10), especially for a motor vehicle, with at least one wiper bearing (14) which is produced in an injection-moulding process and into which a wiper shaft (16), which is capable of driving a wiper arm, can be inserted, wherein the wiper bearing (14) has at least one bearing housing (32) and two fastening sections (34), wherein the first fastening section is used for fastening to a support tube and the second fastening section for fastening to the motor vehicle body, wherein the bearing housing (32) and the fastening sections (34) are formed as a single piece from plastic, **characterized in that** the wiper bearing (14) has a bearing shell (36) which is injected directly into the bearing housing (32), and therefore the wiper bearing (14) is produced in a two-component injection-moulding process.

2. Wiper device (10) according to Claim 1, **characterized in that** the bearing housing (32) and bearing shell (36) are injection moulded from different plastics materials.

3. Wiper device (10) according to either of Claims 1 and 2, **characterized in that** the at least one bearing housing (32) has retaining grooves (38) for securing the at least one bearing shell (36).

4. Wiper device (10) according to one of Claims 1 to 3, **characterized in that** the at least one bearing housing (32) has a knurled portion (40) for securing the at least one bearing shell (36).

5. Wiper device (10) according to one of Claims 1 to 4, **characterized in that** the at least one bearing shell (36) substantially corresponds in its shape to a hollow cylinder.

## Revendications

1. Dispositif d'essuie-glace (10), en particulier pour un véhicule automobile, comprenant au moins un palier d'essuie-glace (14) fabriqué dans un procédé de moulage par injection, dans lequel peut être inséré un arbre d'essuie-glace (16) qui permet d'entraîner un bras d'essuie-glace, le palier d'essuie-glace (14) présentant au moins un logement de palier (32) et deux portions de fixation (34), la première servant à la fixation à un tube porteur et la deuxième servant à la fixation à la carrosserie du véhicule automobile, le logement de palier (32) et les portions de fixation (34) étant réalisés d'une seule pièce en plastique, **caractérisé en ce que** le palier d'essuie-glace (14) présente une coque de palier (36) qui est injectée directement dans le logement de palier (32), de sorte que le palier d'essuie-glace (14) soit fabriqué dans un procédé de moulage par injection à deux composants.

2. Dispositif d'essuie-glace (10) selon la revendication 1, **caractérisé en ce que** le logement de palier (32) et la coque de palier (36) sont injectés à partir de différents matériaux en plastique.

3. Dispositif d'essuie-glace (10) selon l'une quelconque des revendications 1 à 2, **caractérisé en ce que** l'au moins un logement de palier (32) présente des rainures de retenue (38) pour la fixation de l'au moins une coque de palier (36).

4. Dispositif d'essuie-glace (10) selon l'une quelconque des revendications 1 à 3, **caractérisé en ce que** l'au moins un logement de palier (32) présente un moletage (40) pour fixer l'au moins une coque de palier (36).

5. Dispositif d'essuie-glace (10) selon l'une quelconque des revendications 1 à 4, **caractérisé en ce que** l'au moins une coque de palier (36) correspond de par sa forme essentiellement à un cylindre creux.
